# EUROPÄISCHE PATENTSCHRIFT

(11) **EP 3 381 270 B1**
(45) Veröffentlichungstag und Bekanntmachung des Hinweises auf die Patenterteilung: **26.08.2020**
(21) Anmeldenummer: 18154206.9
(22) Anmeldetag: 30.01.2018
(51) Int. Cl.: A01G 3/00, A01D 34/43

(54) **MULCHER**
MULCHER
BROYEUR

(30) Priorität: 27.03.2017 AT 1252017
(43) Veröffentlichungstag der Anmeldung: 03.10.2018
(73) Patentinhaber: Helmut Längle OG, 8844 Schöder (AT)
(72) Erfinder: Längle, Helmut, 8863 Predlitz (AT); Draschl, Ewald, 8854 Krakau (AT)
(74) Vertreter: Wirnsberger & Lerchbaum Patentanwälte OG

(56) Entgegenhaltungen:
- EP-A1- 1 935 595
- DE-A1- 2 213 279
- DE-B3-102010 050 786
- DE-U1- 9 217 851
- DE-U1-202007 015 665

## Beschreibung

Die Erfindung betrifft eine Vorrichtung zum Schneiden von Pflanzen und dergleichen aufweisend einen Mulcher zum Mähen und Zerkleinern von Pflanzen, insbesondere von Ästen und Bäumen, aufweisend eine um eine Achse senkrecht zu einer Vorschubrichtung rotierbar angeordnete Schneidwalze.

Aus dem Stand der Technik sind verschiedene Mulcher der eingangs genannten Art bekannt geworden. Derartige Mulcher werden beispielsweise zum Schneiden von Gras und dergleichen eingesetzt. Nachteilig bei Mulchern des Standes der Technik ist, dass geschnittene Pflanzenteile nach einem Abschneiden derselben vor Ort liegen bleiben.

Das hat einerseits ästhetische Nachteile, insbesondere wenn Zersetzungsprozesse in den geschnittenen Pflanzenteilen einsetzen. Andererseits besteht dadurch auch keine Möglichkeit, die geschnittenen Pflanzenteile weiterzuverwenden.

Ein gattungsgemäßes Mulchgerät zum Mähen und Zerkleinern von Pflanzen, das auch mit einem Sammelbehälter versehen ist, ist aus der DE 22 13 279 A1 bekannt.

Hier setzt die Erfindung an. Aufgabe der Erfindung ist es, einen Mulcher der eingangs genannten Art anzugeben, mit welchem ein verbessertes Mähen und Zerkleinern von Pflanzen möglich ist.

Diese Aufgabe wird durch eine Vorrichtung nach Anspruch 1 gelöst.

Im Rahmen der Erfindung wurde erkannt, dass ein Entfernen der abgeschnittenen Pflanzenteile auf zuverlässige Weise dann möglich ist, wenn diese nicht direkt von einem Bereich hinter der Schneidwalze abgesaugt werden, sondern in einem Bereich hinter der Schneidwalze, in welchen die abgeschnittenen Pflanzenteile durch die Rotation der Schneidwalze bei einem Betrieb gefördert werden, eine Transporteinrichtung vorgesehen ist, mit welcher die geschnittenen Pflanzenteile zu einen Sammelbehälter transportiert werden, von welchem aus die Pflanzenteile mittels einer Absaugeinrichtung abtransportierbar sind. Dadurch ist auch ein Abtransport, und somit auch eine Weiterverwertung, von Pflanzenteilen mit höherer Dichte, beispielsweise von Holz und dergleichen, möglich.

Eine einfache und gleichzeitig robuste Konstruktion wird erreicht, wenn der Sammelbehälter starr mit einem Gehäuse verbunden ist, in welchem die Schneidwalze rotierbar angeordnet ist. Üblicherweise ist der Sammelbehälter unmittelbar hinter der Schneidwalze positioniert und Teil des Mulchers oder lösbar mit dem Mulcher verbunden, sodass eine kompakte Bauweise erreicht wird.

Ein Transport der geschnittenen Pflanzenteile vom Bereich hinter der Schneidwalze in den Sammelbehälter kann mit der Transporteinrichtung grundsätzlich auf verschiedenste Weise, erfolgen. Beispielsweise kann die Transporteinrichtung ein Förderband, einen Kettenförderer oder ein Gebläse aufweisen, mit welchem die Pflanzenteile entlang einer Förderrichtung zum Sammelbehälter gefördert werden. Ferner kann der Transport zum Sammelbehälter auch mittels Schwerkraft erfolgen. Eine besonders robuste Bauweise des Mulchers, welcher üblicherweise auch für die Forstarbeit verwendet wird, ergibt sich, wenn die Transporteinrichtung eine Transportschnecke bzw. eine Förderschnecke aufweist. Die Förderschnecke weist in der Regel eine Achse auf, welche etwa parallel zu einer Rotationsachse der Schneidwalze in Vorschubrichtung der Schneidwalze nachgelagert angeordnet ist. Ferner ist die Förderschnecke in der Regel in einem unteren Teil des Bereiches positioniert, in welchem die mit der Schneidwalze zerkleinerten Pflanzenteile gefördert werden. Dadurch fallen die in den Bereich hinter der Schneidwalze geförderten Pflanzenteile auf die Förderschnecke, sodass diese zwangsläufig mit der Förderschnecke zum Sammelbehälter transportiert werden. Dies gewährleistet, dass auch sperrige Pflanzenteile nicht zu einer Blockade der Transporteinrichtung führen. Somit wird eine besonders robuste Vorrichtung erreicht.

Eine vorteilhafte Hantierbarkeit des Mulchers ergibt sich, wenn die Pflanzenteile hinter der Schneidwalze parallel zu einer Achsrichtung der Schneidwalze transportierbar sind. Der Sammelbehälter kann dann unmittelbar hinter der Schneidwalze, beispielsweise an einem seitlichen Ende des Mulchers, angeordnet sein, wodurch ein kompakter Mulcher erreicht wird, welcher auch in unwegsamem Gelände wie beispielsweise in einem Wald einfach verfahrbar ist.

Die Transporteinrichtung kann grundsätzlich auch zum Transport der geschnittenen Pflanzenteile in den Sammelbehälter ausschließlich mittels Schwerkraft ausgebildet sein. Es hat sich jedoch bewährt, dass ein Antrieb für die Transporteinrichtung vorgesehen ist. Der Antrieb kann dabei als separater Motor ausgebildet sein. Alternativ kann der Antrieb für die Transporteinrichtung auch über die Schneidwalze erfolgen, sodass die Transporteinrichtung mit einem Antrieb der Schneidwalze gekoppelt wird.

Zur Gewährleistung einer hohen Zuverlässigkeit auch unter rauen Betriebsbedingungen ist es vorteilhaft, wenn die Transporteinrichtung über eine Koppeleinrichtung, insbesondere einen Keil- oder Zahnriemen, mit einem Antrieb, vorzugsweise einem Hydraulikmotor, gekoppelt ist. Eine unerwartete Blockade der Transporteinrichtung, insbesondere einer Förderschnecke, führt dann nicht zu einer Beschädigung des Antriebes, sondern allenfalls zu einem Rutschen oder Versagen der Koppeleinrichtung, welche einfacher und kostengünstiger als der Antrieb oder die Transporteinrichtung tauschbar ist. Die Koppeleinrichtung wirkt somit vorzugsweise als Sollbruchstelle im Fall einer Überlast.

Um Pflanzen und dergleichen in unterschiedlichsten Positionen, beispielsweise an Böschungen mit dem Mulcher, schneiden zu können, ist es erfindungsgemäß vorgesehen, dass der Mulcher mit einem bewegbaren Arm verbunden ist, sodass der Mulcher mit dem Arm frei bewegbar ist. Der Mulcher ist dann mit dem bewegbaren Arm üblicherweise in jeder Raumrichtung translatorisch und um jede mögliche Achse im Raum rotatorisch bewegbar, sodass der Mulcher auch gezielt für ein Freischneiden eines Weges oder dergleichen einsetzbar ist.

Erfindungsgemäß ist der Mulcher mit einer Absaugeeinrichtung verbunden. Dabei kann eine Absaugeinrichtung des Standes der Technik eingesetzt werden. Der Sammelbehälter ist mit einem Anschluss verbunden, mit welchem ein Schlauch einer Absaugeinrichtung lösbar verbunden ist, sodass mit der Absaugeinrichtung im Sammelbehälter befindliche Pflanzenteile absaugbar sind. Erfindungsgemäß weist die Vorrichtung zum Schneiden von Pflanzen und dergleichen, auch ein Fahrzeug, insbesondere einen Traktor auf, mit welchem der Mulcher über einen frei bewegbaren Arm verbunden und entlang einer Vorschubrichtung verfahrbar ist.

Die

Vorrichtung kann dann zum rückstandsfreien Mähen und Zerkleinern von Pflanzen, insbesondere von jungen Bäumen bzw. zum Freischneiden von Forstwegen, eingesetzt werden.

Um Pflanzenteile unmittelbar nach einem Mähen und Zerkleinern derselben absaugen zu können, ist erfindungsgemäß eine Absaugeinrichtung vorgesehen, mit welcher zerkleinerte Pflanzenteile vom Mulcher in einen Transportbehälter, insbesondere einen verfahrbar mit dem Fahrzeug verbundenen Container, transportierbar sind.

Eine robuste Bauweise zum Einsatz der Vorrichtung auch in unwegsamem Gelände ergibt sich dadurch, dass die Absaugeinrichtung einen bewegbaren Schlauch aufweist, welcher zumindest teilweise entlang des Armes verläuft und den Mulcher mit dem Transportbehälter verbindet.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 einen Schnitt durch einen Mulcher einer erfindungsgemäßen Vorrichtung;
Fig. 2 eine Draufsicht auf einen Mulcher einer erfindungsgemäßen Vorrichtung;
Fig. 3 bis 5 eine Vorrichtung mit einem Mulcher einer erfindungsgemäßen Vorrichtung;

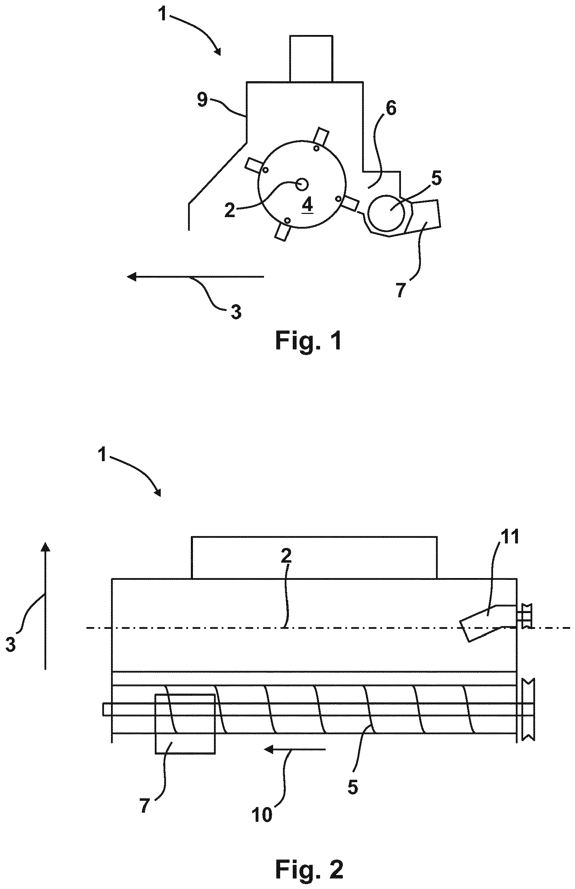

Fig. 1 und 2 zeigen einen erfindungsgemäßen Mulcher 1 schematisch in unterschiedlichen Ansichten. In Fig. 1 ist der Mulcher 1 in einem Schnitt senkrecht zu einer Achse 2 einer Schneidwalze 4 des Mulchers 1 dargestellt, während in Fig. 2 eine Draufsicht auf den Mulcher 1 schematisch dargestellt ist.

Die Schneidwalze 4 ist in der in Fig. 1 dargestellten Ansicht im Uhrzeigersinn rotierbar antreibbar. Mittels der um die Achse 2 rotierbaren Schneidwalze 4 ist es möglich, mit dem Mulcher 1 Pflanzen wie Gras und kleine Bäume zu schneiden und diese durch die Rotation der Schneidwalze 4 in einen Bereich 6 hinter der Schneidwalze 4 zu fördern. Im Bereich 6 hinter der Schneidwalze 4 ist eine als Förderschnecke 5 ausgebildete Transporteinrichtung angeordnet, mit welcher die geschnittenen Pflanzenteile zu einem Sammelbehälter 7 transportierbar sind. Zur besseren Veranschaulichung ist in Fig. 2 eine Abdeckung über der Förderschnecke 5 nicht dargestellt, sodass die Förderschnecke 5 in einem hinteren Bereich 6 des Mulchers 1 ersichtlich ist.

Am als Trog ausgebildeten Sammelbehälter 7 ist ein in Fig. 1 und 2 nicht dargestellter Anschluss 13 zur Verbindung des Sammelbehälters 7 mit einem Schlauch 14 einer Absaugeinrichtung 8 vorgesehen, sodass die Pflanzenteile aus dem Sammelbehälter 7 abgesaugt werden können.

Wie ersichtlich ist die Förderschnecke 5 in einem Gehäuse 9 drehbar gelagert, in welchem die Schneidwalze 4 angeordnet ist, sodass eine kompakte Bauweise erreicht wird. Ein Antrieb der Förderschnecke 5 erfolgt über einen Hydraulikmotor 11 und einen nicht dargestellten Keilriemen, welcher auch als Überlastschutz wirkt. Mit der Förderschnecke 5 sind Pflanzenteile im Bereich 6 entlang einer Förderrichtung 10, welche hier senkrecht zur Vorschubrichtung 3 ausgerichtet ist, förderbar. Im Ausführungsbeispiel ist der Sammelbehälter 7 an einem seitlichen Ende der Förderschnecke 5 angeordnet, sodass die in Förderrichtung 10 geförderten Pflanzenteile in den Sammelbehälter 7 transportiert werden, von welchem aus diese abgesaugt werden können.

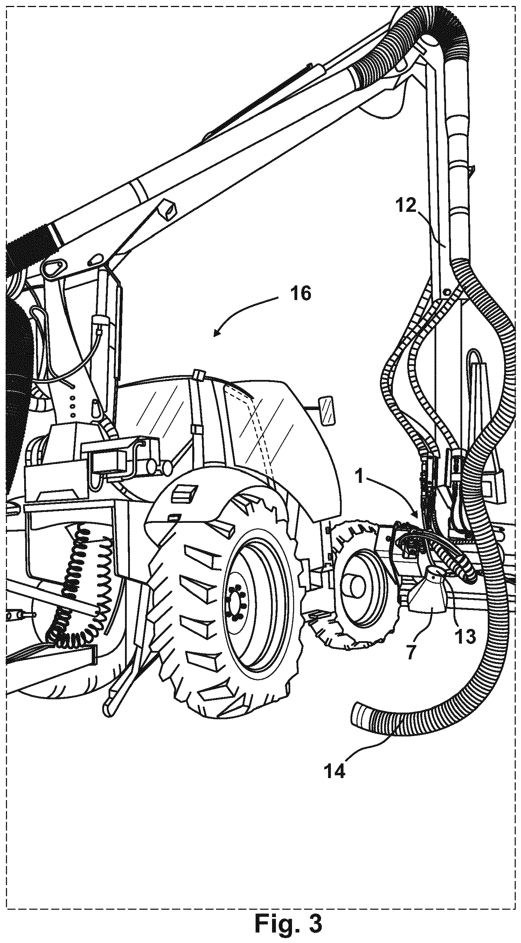

Fig. 3 zeigt eine Vorrichtung mit einem als Traktor 16 ausgebildeten Fahrzeug und einem über einen bewegbaren Arm 12 bewegbar mit dem Traktor 16 verbundenen erfindungsgemäßen Mulcher 1. Mittels des Armes 12 ist der Mulcher 1 somit relativ zum Traktor 16 frei bewegbar, und zwar in sämtlichen Raumrichtungen translatorisch sowie um sämtliche Raumachsen rotatorisch. Der Mulcher 1 ist dadurch an verschiedenste Positionen frei bewegbar, beispielsweise um Böschungen und dergleichen freizuschneiden. Wie ersichtlich ist der Schlauch 14 der Absaugeinrichtung 8 entlang des Armes 12 geführt, sodass der Mulcher 1 ohne Beschädigungen des Schlauches 14 zu verschiedensten Positionen bewegbar ist. Der Schlauch 14 verbindet somit im Betrieb den Sammelbehälter 7 am Mulcher 1 mit einer Saugeinrichtung 15, von welcher aus die Pflanzenteile in einen als Container 17 ausgebildeten Transportbehälter gefördert werden können, sodass die Pflanzenteile mit der Saugeinrichtung 15 direkt aus dem als Trog ausgebildeten Sammelbehälter 7 am Mulcher 1 in den Transportbehälter förderbar sind.

In Fig. 3 ist der Schlauch 14 in einer nicht mit dem Mulcher 1 verbundenen Position dargestellt, sodass der Anschluss 13 am erfindungsgemäßen Mulcher 1, mit welchem der Schlauch 14 verbindbar ist, gut erkennbar ist. In der Regel ist der Schlauch 14 lösbar mit dem Anschluss 13 verbindbar, sodass der Mulcher 1 mit unterschiedlichen Saugeinrichtungen 15 koppelbar ist.

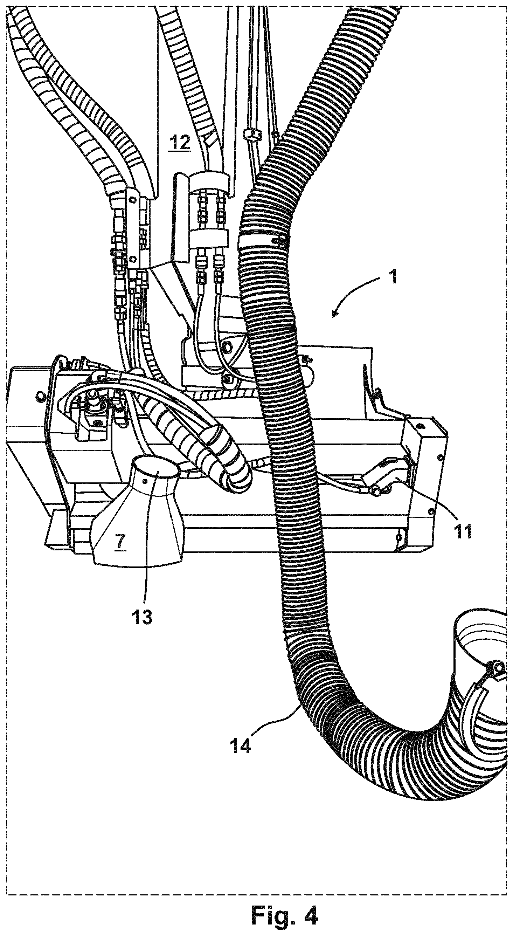

Fig. 4 zeigt eine Rückansicht des Mulchers 1 am Arm 12, wobei ein Schlauch 14 der Absaugeinrichtung 8, welcher lösbar mit dem Mulcher 1 verbindbar ist, zur besseren Veranschaulichung wieder in einer nicht mit dem Mulcher 1 verbundenen Position dargestellt ist. Für einen Betrieb wird der Schlauch 14 mit dem als Öffnung ausgebildeten Anschluss 13 am Sammelbehälter 7 verbunden. Im Schlauch 14 wird mit der Saugeinrichtung 15 ein Unterdruck erzeugt, sodass über den Schlauch 14 mit der Absaugeinrichtung 8 im Sammelbehälter 7 befindliche Pflanzenteile abgesaugt und in einen in der Regel an einem Anhänger 18 des Traktors 16 befindlichen und als Container 17 ausgebildeten Transportbehälter gefördert werden. Die Pflanzenteile können dann weiterverwertet, beispielsweise verbrannt, werden.

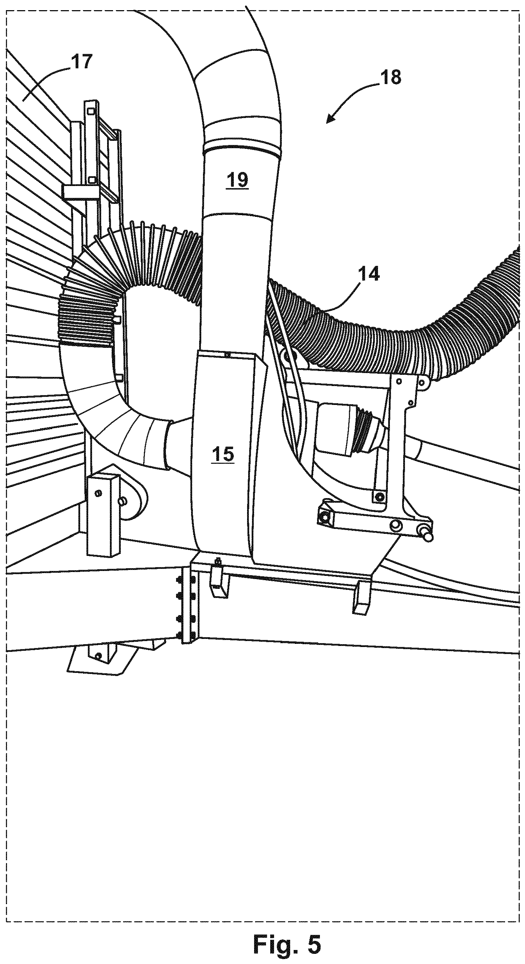

Fig. 5 zeigt die hier als Radialgebläse ausgebildete Saugeinrichtung 15 im Detail, welche mit einem zweiten Ende des Schlauches 14 verbunden ist. Ein erstes Ende des Schlauches 14 ist im Betrieb mit dem in Fig. 3 und Fig. 4 dargestellten Anschluss 13 am Mulcher 1 bzw. am Sammelbehälter 7 verbunden, um geschnittene Pflanzenteile abzusaugen.

An einer Druckseite der Saugeinrichtung 15 ist ein in den Container 17 mündendes Auswurfrohr 19 angeordnet, sodass mit der Saugeinrichtung 15 abgesaugte Pflanzenteile durch die Saugeinrichtung 15 direkt in den Container 17 zur weiteren Verwendung transportiert werden können. Die Saugeinrichtung 15 ist hierzu an einem vorderen Ende eines Anhängers 18 angeordnet, auf welchem der Container 17 positioniert ist und welcher mit dem Traktor 16 gekoppelt ist. Dadurch kann die Saugeinrichtung 15 auf einfache Weise direkt über eine Zapfwelle des Traktors 16 angetrieben werden.

Mit einem erfindungsgemäßen Mulcher 1 ist ein rückstandsfreies Schneiden von Pflanzen wie Gräsern und Holz auf effiziente Weise möglich. Nachdem die Pflanzenteile dabei auf einfache Weise gesammelt werden, können diese auch mit geringem Aufwand weiterverwertet werden.

Aufgrund der eingesetzten Förderschnecke 5 ist der Mulcher 1 besonders robust und auch in unwegsamem Gelände und für sperrige Pflanzenteile einsetzbar, weswegen dieser auch für die Forstarbeit geeignet ist.

## Patentansprüche

1. Vorrichtung zum Schneiden von Pflanzen und dergleichen, aufweisend einen Mulcher (1) zum Mähen und Zerkleinern von Pflanzen, eine Absaugvorrichtung (8), mit welcher zerkleinerte Pflanzenteile vom Mulcher (1) in einen Transportbehälter transportierbar sind, sowie ein Fahrzeug, mit welchem der Mulcher (1) über einen frei bewegbaren Arm (12) verbunden und entlang einer Vorschubrichtung (3) verfahrbar ist, wobei der Mulcher (1) eine um eine Achse (2) senkrecht zu einer Vorschubrichtung (3) rotierbar angeordnete Schneidwalze (4) aufweist, wobei eine Transporteinrichtung vorgesehen ist, mit welcher zerkleinerte Pflanzen von einem Bereich (6) hinter der Schneidwalze (4), in welchen die zerkleinerten Pflanzen mittels der Schneidwalze (4) gefördert werden, zu einem Sammelbehälter (7) transportierbar sind, von welchem aus die Pflanzenteile mittels der Absaugeinrichtung (8) abtransportierbar sind, wobei der Sammelbehälter (7) starr mit einem Gehäuse (9) verbunden ist, in welchem die Schneidwalze (4) rotierbar angeordnet ist, wobei der Sammelbehälter (7) mit einem Anschluss (13) verbunden ist, mit welchem ein Schlauch (14) der Absaugeinrichtung (8) verbunden ist, wobei der Schlauch zumindest teilweise entlang des Armes (12) verläuft und den Mulcher (1) mit dem Transportbehälter verbindet, sodass mit der Absaugeinrichtung (8) im Sammelbehälter (7) befindliche Pflanzenteile absaugbar sind.

2. Vorrichtung nach Anspruch 1, **dadurch gekennzeichnet, dass** der Transportbehälter als mit dem Fahrzeug verfahrbar verbundener Container (17) ausgebildet ist.

3. Vorrichtung nach Anspruch 1 oder 2, **dadurch gekennzeichnet, dass** das Fahrzeug als Traktor (16) ausgebildet ist.

4. Vorrichtung nach einem der Ansprüche 1 bis 3, **dadurch gekennzeichnet, dass** die Transporteinrichtung eine Förderschnecke (5) aufweist.

5. Vorrichtung nach einem der Ansprüche 1 bis 4, **dadurch gekennzeichnet, dass** die Pflanzenteile hinter der Schneidwalze (4) parallel zu einer Achsrichtung der Schneidwalze (4) transportierbar sind.

6. Vorrichtung nach einem der Ansprüche 1 bis 5, **dadurch gekennzeichnet, dass** ein Antrieb für die Transporteinrichtung vorgesehen ist.

7. Vorrichtung nach einem der Ansprüche 1 bis 6, **dadurch gekennzeichnet, dass** die Transporteinrichtung über eine Koppeleinrichtung mit einem Antrieb gekoppelt ist.

8. Vorrichtung nach Anspruch 7, **dadurch gekennzeichnet, dass** die Koppeleinrichtung als Keil- oder Zahnriemen ausgebildet ist.

9. Vorrichtung nach Anspruch 7 oder 8, **dadurch gekennzeichnet, dass** der Antrieb als Hydraulikmotor (11) ausgebildet ist.

## Claims

1. A device for cutting plants and the like, having a mulcher (1) for cutting and shredding plants, a suction device (8), by means of which shredded plant parts can be transported from the mulcher (1) to a transport container, as well as a vehicle, with which the mulcher (1) is connected via a freely moveable arm (12) and by means of which the mulcher (1) can be moved along a direction of travel (3), wherein the mulcher (1) has a cutting roller (4) which is rotatable about an axis (2) that is perpendicular to a direction of travel (3), wherein a transport device is provided, by means of which shredded plants can be transported from an area (6) behind the cutting roller (4), into which the shredded plants are conveyed by means of the cutting roller (4), to a collection container (7), from which the plant parts can be transported away by means of the suction device (8), wherein the collection container (7) is rigidly connected with a housing (9) in which the cutting roller (4) is rotatably arranged, wherein the collection container (7) is connected with a connector (13), with which a hose (14) of the suction device (8) is connected, wherein the hose at least partially extends alongside the arm (12) and connects the mulcher (1) with the transport container, such that plant parts located inside the collection container (7) can be extracted by means of the suction device (8).

2. The device according to Claim 1, **characterized in that** the transport container is designed as a container (17) connected to the vehicle in a moveable manner.

3. The device according to Claim 1 or 2, **characterized in that** the vehicle is designed as a tractor (16).

4. The device according to any one of Claims 1 to 3, **characterized in that** the transport device has a screw conveyor (5).

5. The device according to any one of Claims 1 to 4, **characterized in that** the plant parts can be transported parallel to an axial direction of the cutting roller (4) behind the cutting roller (4).

6. The device according to any one of Claims 1 to 5, **characterized in that** a drive for the transport device is provided.

7. The device according to any one of Claims 1 to 6, **characterized in that** the transport device is coupled with the drive via a coupling device.

8. The device according to Claim 7, **characterized in that** the coupling device is designed as a V-belt or a toothed belt.

9. The device according to Claim 7 or 8, **characterized in that** the drive is designed as a hydraulic motor (11).

## Revendications

1. Dispositif, destiné à couper des plantes et similaires, comportant une hacheuse (1), destinée à tondre et à broyer des plantes, un dispositif d'aspiration (8), à l'aide duquel des parties de plantes broyées sont susceptibles d'être transportées de la hacheuse (1) dans un contenant de transport, ainsi qu'un véhicule, avec lequel la hacheuse (1) est reliée par l'intermédiaire d'un bras (12) librement mobile et déplaçable le long d'un dispositif d'avance (3), la hacheuse (1) comportant un cylindre de coupe (4) placé en rotation autour d'un axe (2), à la perpendiculaire d'un dispositif d'avance (3), un système de transport étant prévu, à l'aide duquel des plantes broyées sont susceptibles d'être transportées d'une région (6) à l'arrière du cylindre de coupe (4), dans laquelle les plantes broyées sont convoyées au moyen du cylindre de coupe (4) vers un réservoir collecteur (7), à partir duquel les parties de plantes sont susceptibles d'être évacuées au moyen du dispositif d'aspiration (8), le réservoir collecteur (7) étant relié de manière rigide avec un carter (9) dans lequel le cylindre de coupe (4) est placé de manière rotative, le réservoir collecteur (7) étant relié avec un raccord (13) avec lequel est relié un flexible (14) du dispositif d'aspiration (8), le flexible s'écoulant au moins en partie le long du bras (12) et reliant la hacheuse (1) avec le contenant de transport, de sorte qu'avec le dispositif d'aspiration (8), des parties de plantes se trouvant dans le réservoir collecteur (7) puissent être aspirées.

2. Dispositif selon la revendication 1, **caractérisé en ce que** le contenant de transport est conçu sous la forme d'un conteneur (17) relié de manière déplaçable avec le véhicule.

3. Dispositif selon la revendication 1 ou 2, **caractérisé en ce que** le véhicule est conçu sous la forme d'un tracteur (16).

4. Dispositif selon l'une quelconque des revendications 1 à 3, **caractérisé en ce que** le système de transport comporte une vis sans fin (5).

5. Dispositif selon l'une quelconque des revendications 1 à 4, **caractérisé en ce que** les parties de plantes sont susceptibles d'être transportées derrière le cylindre de coupe (4), à la parallèle d'une direction axiale du cylindre de coupe (4).

6. Dispositif selon l'une quelconque des revendications 1 à 5, **caractérisé en ce qu'**il est prévu un entraînement pour le système de transport.

7. Dispositif selon l'une quelconque des revendications 1 à 6, **caractérisé en ce que** le système de transport est accouplé avec un entraînement par l'intermédiaire d'un système d'accouplement.

8. Dispositif selon la revendication 7, **caractérisé en ce que** le système d'accouplement est conçu sous la forme d'une courroie trapézoïdale ou d'une courroie dentée.

9. Dispositif selon la revendication 7 ou 8, **caractérisé en ce que** l'entraînement est conçu sous la forme d'un moteur hydraulique (11).
